(19) Europäisches Patentamt / European Patent Office / Office européen des brevets

(11) **EP 1 527 321 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(21) Anmeldenummer: 03727233.3

(22) Anmeldetag: **12.05.2003**

(51) Int Cl.:
*G01C 3/06* *(2006.01)*    *G01C 3/08* *(2006.01)*
*G01S 17/10* *(2006.01)*    *G01S 17/36* *(2006.01)*
*G01S 7/48* *(2006.01)*

(86) Internationale Anmeldenummer:
**PCT/DE2003/001522**

(87) Internationale Veröffentlichungsnummer:
**WO 2004/017022 (26.02.2004 Gazette 2004/09)**

(54) **VORRICHTUNG UND VERFAHREN ZUR DISTANZMESSUNG**

DEVICE AND METHOD FOR DISTANCE MEASUREMENT

DISPOSITIF ET PROCEDE DE TELEMETRIE

(84) Benannte Vertragsstaaten:
**DE FR GB IT**

(30) Priorität: **19.07.2002 DE 10232878**

(43) Veröffentlichungstag der Anmeldung:
**04.05.2005 Patentblatt 2005/18**

(60) Teilanmeldung:
**08102698.1 / 1 927 821**

(73) Patentinhaber: **ROBERT BOSCH GMBH
70442 Stuttgart (DE)**

(72) Erfinder:
• **STIERLE, Joerg
71111 Waldenbuch (DE)**
• **WOLF, Peter
70771 Leinfelden-Echterdingen (DE)**
• **FLINSPACH, Gunter
71229 Leonberg (DE)**

(56) Entgegenhaltungen:
**US-A- 5 612 779    US-A- 5 946 081
US-A- 6 115 112**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung geht aus von einer Vorrichtung zur Distanzmessung nach dem Oberbegriff des Anspruchs 1 bzw. von einem Verfahren zur Entfernungsmessung nach dem Oberbegriff des Anspruchs 15.

Stand der Technik

Entfernungsmessgeräte und insbesondere optische Entfernungsmessgeräte als solche sind seit geraumer Zeit bekannt. Diese Geräte senden einen modulierten Messstrahl, beispielsweise einen Licht- oder Laserstrahl aus, der auf ein gewünschtes Zielobjekt, dessen Abstand zum Gerät zu ermitteln ist, ausgerichtet wird. Das von dem angepeilten Zielobjekt reflektierte oder gestreute, rücklaufende Mess-Signal wird von dem Gerät teilweise wieder detektiert und zur Ermittlung des gesuchten Abstandes verwendet.

Dabei unterscheidet man sogenannte Phasenmessverfahren und reine Laufzeitverfahren zur Bestimmung des gesuchten Abstandes zum Zielobjekt. Bei den Laufzeitmessverfahren wird beispielsweise ein Lichtimpuls möglichst kurzer Impulsdauer von dem Messgerät ausgesendet und anschließend dessen Laufzeit zum Zielobjekt und wieder zurück ins Messgerät ermittelt. Mit dem bekannten Wert der Lichtgeschwindigkeit lässt sich daraus die Entfernung des Messgerätes zum Zielobjekt errechnen.

Bei den Phasenmessverfahren hingegen wird die Variation der Phase des Mess-Signals mit der durchlaufenen Strecke zur Bestimmung des Abstandes zwischen dem Messgerät und dem Zielobjekt ausgenutzt. Über die Größe der Phasenverschiebung des rücklaufenden Lichtes im Vergleich zum ausgesendeten Licht lässt sich die vom Licht durchlaufene Strecke und somit der Abstand des Messgerätes zum Zielobjekt bestimmen.

Der Anwendungsbereich derartiger Entfernungsmessgeräte umfasst im allgemeinen Entfernungen im Bereich von einigen wenigen Millimetern bis zu mehreren hundert Metern. In Abhängigkeit von den zu messenden Laufstrecken, den Umweltbedingungen sowie der Rückstrahlfähigkeit des ausgewählten Zielobjektes ergeben sich unterschiedliche Anforderungen an die Leistungsfähigkeit eines solchen Messgerätes.

Derartige Messgeräte werden mittlerweile in kompakter Ausführung kommerziell vertrieben und erlauben dem Anwender einen einfachen, handgehaltenen Betrieb.

Bekannt sind Laserentfernungsmesser, die eine definierte Messgenauigkeit aufweisen, die im Wesentlichen durch das dem Messgerät zugrundeliegende Messsystem definiert wird. Diese Genauigkeit des Entfernungsmessers wird für einen spezifizierten Messbereich des Messgerätes, beispielsweise herstellerseitig, garantiert.

Aus der DE 198 11 550 A1 ist beispielsweise eine Schaltungsanordnung und ein Verfahren zur optischen Distanzmessung bekannt, bei dem zumindest zwei unterschiedliche, eng benachbarte Messfrequenzen aus einem Oszillator abgeleitet werden. Um über einen möglichst großen Messbereich messen zu können und gleichzeitig eine möglichst hohe Messgenauigkeit bei der Entfernungsmessung zu erzielen, werden in dem Verfahren der DE 198 11 550 A1 drei unterschiedliche Frequenzen im Bereich von ca. 1 MHz bis ca. 300 MHz genutzt und die gesuchte Strecke mit jeder dieser Frequenzen vermessen.

Aus der EP 0 885 399 B1 ist ein optisches Verfahren zur Messung von Abständen nach dem Impulslaufzeit-Verfahren bekannt, bei dem sowohl eine Grobmessprozedur als auch eine Feinmessprozedur durchgeführt wird. Mittels einer Grobmessprozedur wird ein Messzeitintervall bestimmt, welches größer ist, als eine abgeschätzte Ausbreitungszeit des Lichtsignals zu und von dem gewünschten Zielobjekt zurück. Innerhalb dieses Messzeitintervalls wird ein passendes Messzeitgebiet vorab fixiert. Während der Feinmessprozedur werden dann eine Reihe von. Untermessungen durchgeführt, wobei für jede Untermessung ein Messlichtsipal zum Zielobjekt gesendet wird und der empfangene, rücklaufende Lichtimpuls, der vom Zielobjekt reflektiert wird, nur innerhalb des passenden Messzeitgebites, das während der Grobmessprozedur fixiert worden ist, gesammelt wird. Der genaue Abstand des Messgerätes zum Zielobjekt wird dann über eine Mittelung über die Einzelmessungen der Feinmessprozedur durchgeführt.

Aus der US 5 612 779 A ist ein Laserentfernungsmesser mit einem automatischen Rauschschwelle Bestimmungssystem bekannt. Bei der Vorrichtung der US 5 612 779 A wird über einen automatischen Rauschschwellen Bestimmungsschaltkreis die Rausch-Detektionsschwelle im Empfangsast des Messsystems derart angepasst, dass ein konstantes Signal zu Rausch Verhältnis (S/N) ausgangsseitig des Detektors vorliegt. Dies ermöglicht der Vorrichtung der US 5 612 779 A eine maximale Rücklaufsignal Empfindlichkeit und die Detektion auch von sehr schwachen Laserimpulsen.

Aus der US 5 946 081 A ist ein Verfahren zum Reduzieren des Rauschens im Empfänger eines Laser-Entfernungsmessers bekannt, bei dem das Rauschen, welches durch die Hochspannungsschaltung induziert wird, beseitigt wird. Darüber hinaus sollen auch die Koppfungseffekte zwischen dem Sender und Empfänger dieser Vorrichtung reduziert werden. Das Signa7Rauschverhältnis (S/N) des Empfängers wird durch einen Anpassungsfilter optimiert. Das Sonnenrauschen wird bei der Vorrichtung der US 5 946 081 A gemessen, um die Schwellenspannung eines Komparators einzustellen, damit der Empfänger in eine optimalen Status arbeitet. Um die Genauigkeit weiter zu erhöhen, wenn der Empfänger im optimalen Zustand arbeitet, kann der Nutzer der Vorrichtung der US 5 946 081 A die Sendezahl bzw. die Anzahl an Sendevorgängen in Bezug auf ein unterschiedliches Ziel einstellen, um zwei Abstandsdaten für jede Sendung zu erzielen, woraufhin sämtliche Daten gemittelt werde, um präzisere Abstandsdaten zu gewinnen.

Aufgabe der vorliegenden Erfindung ist es, den mit einem kompakten, insbesondere handgehaltenen Messgerät zur Entfernungsmessung nutzbaren Entfernungsbereich, das heisst, denjenigen Entfernungsbereich, über den eine Distanzmessung mit den Gerät möglich ist, mit einfachen Mitteln zu erweitern.

Diese Aufgabe wird gelöst durch eine erfindungsgemäße Vorrichtung zur Distanzmessung mit den Merkmalen des Anspruchs 1 beziehungsweise durch ein Verfahren zur Distanzmessung mit den Merkmalen des Anspruchs 15.

Vorteile der Erfindung

Im Gegensatz zu Geräten des Standes der Technik hat die erfindungsgemäße Vorrichtung beziehungsweise das erfindungsgemäße Verfahren den Vorteil, dass ein Messen von Entfernungen mit unterschiedlichen Messgenauigkeiten möglich ist. Ist eine Messgenauigkeit über einen bestimmten Bereich von Messweiten garantiert und damit festgelegt, so ist dies, beispielsweise aufgrund der Abnahme der Signalstärke mit der Entfernung, ein begrenzendes Kriterium für die maximal mit der zuvor festgelegten Messunsicherheit noch zu ermittelnden Messweite. Die Messunsicherheit einer Messung wird im Wesentlichen bestimmt durch das Signal-zu-Rausch-Verhältnis (S/N) des Mess-Signals. Dies führt insbesondere für kleine reflektierte Signale, wie sie beispielsweise für große Messweiten oder bei einem Messen gegen Oberflächen geringer Reflektivität vorliegen, zur Einschränkung des mit einer spezifizierten Messunsicherheit noch messbaren Messbereichs. Sind die Messunsicherheiten, mit denen eine entsprechende Entfernungsmessung durchgeführt wird, nicht fixiert, sondern vom Anwender oder einer Geräteautomatik vorgebbar, so kann der mit einem solchen Messgerät beziehungsweise entsprechend einem solchen Verfahren zugängliche Messbereich über den Entfernungsmessungen-möglich sind, deutlich erweitert werden, wenn auch unter Inkaufnahme einer erhöhten Messunsicherheit.

Für eine Vielzahl der Einsatzgebiete eines beispielsweise handgehaltenen, kompakten Entfernungsmessgerätes überwiegen die Vorteile, die sich durch die Messbereichserweiterung ergeben, den eventuellen Nachteile einer größeren Messunsicherheit, beziehungsweise einer reduzierten Messgenauigkeit.

Durch die in den abhängigen Ansprüchen aufgeführten Maßnahmen sind vorteilhafte Weiterbildungen der in den unabhängigen Ansprüchen angegebenen Vorrichtung beziehungsweise des beanspruchten Verfahrens möglich.

In vorteilhafter Weise lässt sich die Messungenauigkeit des Messgerätes an die jeweilige Messaufgabe optimal anpassen. In vielen Fällen der typischen Anwendung eines solchen kompakten Entfernungsmessgerätes ist beispielsweise eine hohe Genauigkeit mit einer Auflösung im Bereich von einigen Millimetern nicht erforderlich. Insbesondere beim Messen größerer Entfernungen ist es gewünscht, überhaupt einen ersten Messwert und Anhaltspunkt für die gesuchte Wegstrecke zu erhalten, sodass in diesem Fall eine Bestimmung der gesuchten Strecke mit einer Genauigkeit von einigen wenigen Millimetern gar nicht erforderlich ist. Es würde einen viel zu großen Messaufwand bedeuten, wollte man Entfernungsmessungen über eine Strecke von hundert oder mehr Metern mit der gleichen, geringen Messunsicherheit durchführen, wie bei einer Messung über einige wenige Meter.

Mit der erfindungsgemäßen Vorrichtung zur optischen Distanzmessung ist es in vorteilhafter Weise möglich, den prinzipiell mit solch einer Vorrichtung zu vermessenden Bereich an Entfernungen deutlich auszuweiten. Anstelle einer festen vorgegebenen Messunsicherheit der Entfernungsmessung bzw. einer entsprechenden Auflösung der gemessenen Entfernung wird dazu eine variable Messunsicherheit bei der Entfernungsmessung durch das Gerät ermöglicht. So lässt sich beispielsweise die Messweite eines solchen Entfernungsmessgerätes deutlich erweitern, wenn für den Bereich großer Messweiten, beispielsweise im Bereich von 50 bis mehreren hundert Metern, die Anforderungen an die Messunsicherheit des zu ermittelnden Wertes reduziert werden. Ebenso lässt sich beispielsweise die notwendige Messzeit zur Ermittlung einer Messweite deutlich reduzieren, wenn dafür die Messunsicherheit des Messsystems entsprechend erhöht wird.

In vorteilhafter Weise können dazu eine Reihe von Kennlinien, beispielsweise Kennlinien, die den Verlauf der Messunsicherheit über einer Messdistanz vorgeben, in einem Speichermedium des Messgerätes abgelegt sein.

Durch Vorgabe des Bedieners, beispielsweise über ein entsprechendes Tastenfeld des Gerätes oder durch eine geräteinterne Automatik kann dann eine Kennlinie ausgewählt werden, die eine der Distanzmessung zugrunde zu legende Messunsicherheit in Abhängigkeit von der Messweite vorgibt.

So kann beispielsweise in einer vorteilhaften Ausführungsform des erfindungsgemäßen Messgerätes beziehungsweise des zugrundeliegenden Verfahrens zur Distanzmessung eine maximale Messzeit für eine Messung vorgegeben werden und das Gerät schaltet automatisch zwischen den vorhandenen Kennlinien für die Messunsicherheit um, um unter Berücksichtigung der vorgegebenen Messzeit, diejenige Kennlinie auszuwählen, die eine möglichst geringe Messunsicherheit gewährleistet.

Auf diese Art ist sichergestellt, dass im Bereich kleiner Messdistanzen mit der minimalen Messunsicherheit des Gerätes gearbeitet wird und erst bei großen Distanzen die Messunsicherheit nach und nach immer größer wird, so dass ein erweiterter Messbereich dem Messgerät zugänglich wird, ohne dass im Bereich kleiner Messdistanzen die Messunsicherheit zu groß wird.

In vorteilhafter Weise kann der Steuer- und Auswerteeinheit der Vorrichtung ein Wert für das Signal-Rausch-Verhältnis (S/N) des zu detektierenden, rücklaufenden Amplitudensignals vorgegeben werden. Dieses Signal-Rausch-Verhältnis definiert dann im Wesentlichen die Genauigkeit, mit der eine Entfernungsmessung erfolgen soll.

In ebenfalls vorteilhafter Weise ist der erfindungsgemäße Entfernungsmesser derart konfigurierbar, dass die Messzeit, die Messunsicherheit der Messung sowie die Auflösung des Messergebnisses einzeln oder aber insgesamt wählbar sind. So kann ein Nutzer des erfindungsgemäßen Messgerätes über ein Bedienfeld beispielsweise eine feste Messzeit oder auch eine von ihm gewünschte Genauigkeit für die Entfernungsmessung einstellen. Die Elektronik des Messgerätes passt dann über entsprechende Schaltmittel die verbleibenden Messparameter halbautomatisch derart an, dass die gewünschte Messunsicherheit bzw. die gewünschte Messzeit ermöglicht wird.

Das erfindungsgemäße Messgerät kann so für Arbeiten im Nahbereich bis ca. 10 m auf gut reflektierenden Oberflächen beispielsweise auf eine Messunsicherheit von $10^{-3}$ m eingestellt werden, wobei die Messzeit beispielsweise maximal eine Sekunde betragen möge und die Auflösung des Messgerätes bei $10^{-4}$ m liegen soll. Diese Einstellung mag dazu führen, dass ein Messen auf dunklen Oberflächen nicht mehr möglich ist, was aber für die gewünschte Messsituation des Anwenders irrelevant ist. Das Messgerät lässt sich aber ebenso in vorteilhafter Weise für ein Arbeiten im Fernbereich, beispielsweise zwischen 50 m und 100 m, optimal konfigurieren, indem die Genauigkeit der Messungen auf $10^{-1}$ m zurückgenommen wird und die Auflösung des ermittelten Messwertes auf $10^{-2}$ m gesetzt wird.

In einem Ausführungsbeispiel des erfindungsgemäßen Messgerätes ist ein Sensor integriert, der die Lichtverhältnisse in der Umgebung des Messortes detektiert und daraus ein Maß für das bei einer Messung vorliegende Untergrundsignal bestimmt. Dieses Untergrundsignal geht in das bei einer Messung vorliegende Signal-Rausch-Verhältnis ein und beeinflusst somit die mögliches Messunsicherheit einer Distanzmessung. In einer vorteilhaften Ausführungsform wird diese Sensorfunktion vom dem Detektorelement des Empfangsastes ausgeübt, so dass mit nur einem Detektor sowohl das Messignal als auch das Untergrundsignal bestimmt wird.

Eine automatische Umstellung der Messunsicherheit des Gerätes aufgrund der relativen Stärke des Umgebungslichtes kann in dem erfindungsgemäßen Verfahren vorgesehen sein und entsprechend in einem nach diesem Verfahren arbeitenden Messgerät integriert sein.

So kann beispielsweise der mögliche Entfernungsmessbereich für eine maximal vorgegebene Messzeit durch eine Rücknahme an die Anforderungen des Signal-Rausch-Verhältnisses über der Entfernung ausgeweitet werden. Dies führt speziell im Außenbereich bei Sonneneinstrahlung, d.h. bei einem starken Untergrund- bzw. Rauschsignal, zu einer deutlichen Steigerung der Nutzbarkeit des erfindungsgemäßen Messgerätes.

Vorteilhafterweise kann in der Auswerteeinheit des erfindungsgemäßen Messgeräts beispielsweise nur ein Messparameter (Messzeit, Auflösung der Distanz, Messunsicherheit, ...) fixiert werden, sodass die anderen Messparameter halbautomatisch von der Steuerelektronik des Messgerätes derart angepasst werden, dass bei einer festen Einstellung, beispielsweise der Messzeit, die gesuchte Entfernung mit bestmöglicher Genauigkeit das heisst minimaler Messunsicherheit ermittelt wird, was dann allerdings zu einer, der verwendeten Auflösung angepassten Darstellung des Messwertes führen wird.

Auch ermöglicht es die erfindungsgemäße Vorrichtung zur optischen Distanzmessung, dass das Gerät sich vollautomatisch selbständig derart konfiguriert, dass alle Parameter so angepasst werden, dass je nach Entfernung und Umgebungsbedingungen eine optimale Einstellung der Messparameter vorgenommen wird.

In einem erfindungsgemäßen Ausführungsbeispiel wird der die Messgenauigkeit bestimmende Wert des Signal-Rausch-Verhältnisses durch eine erste, der eigentlichen Entfernungsmessung zeitlich vorgeschalteten, so genannten Grobmessung der Entfernung zum Zielobjekt von der Vorrichtung selbst ermittelt. Die sich anschließende zweite Messung zur Ermittlung des Abstandes zwischen dem Messgerät und dem Zielobjekt erfolgt dann mit einer dem groben Entfernungsbereich angepassten Genauigkeits- und damit Messzeitanforderung.

In einem vorteilhaften Ausführungsbeispiel des erfindungsgemäßen Gerätes sind dazu verschiedene Messunsicherheiten angelegt, die einzelnen Entfernungsintervallen zugeordnet sind. Aufgrund der durch die Grobmessung ermittelten, ungefähren Entfernung wird dann durch das Gerät einer, dieser Entfernung entsprechende Messunsicherheit für die eigentliche Entfernungsmessung ausgewählt.

Auch ist es mit dem erfindungsgemäßen Verfahren möglich, dass der Anwender die Auflösung der Entfernung vor einer Messung selbst vorgibt, indem er beispielsweise über ein Bedienfeld "mm", "cm" oder "m" eingibt und das Messgerät daraus, unter Beachtung der Messsituation, dass heisst beispielsweise unter Beachtung des Niveaus des Untergrundsignales und der gewünschten Messzeit, eine angepasste Messunsicherheit auswählt, das heisst, das Signal-Rausch-Verhältnis bestimmt, bis zu dem gemessen werden soll. Während der laufenden Messung wird dann das jeweils aktuelle Signal-Rausch-Verhältnis von einer Steuer- und Auswerteeinheit des Messgerätes ermittelt und entschieden, ob noch länger gemessen werden muss.

Besonders vorteilhaft ist es, wenn im Messgerät mehrere Kennlinien abgelegt sind, die einen unterschiedlichen Verlauf der Messunsicherheit mit der Messdistanz zeigen, so dass durch die Auswahl einer solchen Kennlinien, eine für einen gewählten Messbereich noch akzeptable Messunsicherheit ausgewählt wird.

Dies kann beispielsweise auch dadurch erfolgen, dass ein Anwender einen ungefähren Entfernungsbereich grob vorgibt und das Gerät dann eine entsprechende, optimierte Kennlinien für die Messunsicherheit auswählt.

In vorteilhafter Weise wird in dem erfindungsgemäßen Messgerät die einer Entfernungsmessung zugrundeliegende Einstellung der Genauigkeit der Längenmessung dem Nutzer über ein optisches Display angezeigt. So kann beispielsweise eine Anzeige "Millimeter", "Zentimeter", "Meter" dem Nutzer sofort vermitteln, in welcher Größenordnung das im Display erscheinende Messergebnis für seine Längenmessung als genau spezifiziert werden kann.

In einem weiteren Ausführungsbeispiel der erfindungsgemäßen Vorrichtung kann beispielsweise die Anzeige des Messergebnisses einer Entfernungsmessung mit den der Genauigkeit der Entfernungsmessung entsprechenden Dezimalen in einer Anzeigevorrichtung des Messgerätes dargestellt werden. Dem Nutzer des Messgerätes wird so, beispielsweise durch die Reduzierung der Anzeigenauflösung, die mit zunehmender Messentfernung abnehmende Messgenauigkeit in einfacher aber eindeutiger Weise visualisiert werden.

Das erfindungsgemäße Verfahren zur Entfernungsmessung mit Phasenverschiebung an amplitudenmoduliertem Licht erlaubt es in einfacher und vorteilhafter Weise, den für ein solches Messgerät möglichen Längenbereich für die Entfernungsmessung deutlich auszuweiten. Alternativerweise ermöglicht das erfindungsgemäße Verfahren beispielsweise die Reduzierung der Messzeit bei einer Messung in einem typischen vorgegebenen Zielobjektabstand. Der mit dem erfindungsgemäßen Verfahren zur Entfernungsmessung zugängliche Messbereich ist nicht mehr durch eine einmal festgelegte, über den gesamten Messbereich und für alle Anwendungen des Gerätes festgeschriebene Messgenauigkeit beschränkt, sondern kann in einfacher Weise durch Anpassung der Messgenauigkeit an die Messaufgabe deutlich erweitert werden. Durch das erfindungsgemäße Verfahren lässt sich der Einsatzbereich eines solchen Messgerätes deutlich erweitern.

Weitere Vorteile der erfindungsgemäßen Vorrichtung bzw. des erfindungsgemäßen Verfahrens ergeben sich aus den Zeichnungen und der zugehörigen Beschreibung.

Zeichnungen

Es zeigen:

Figur 1    eine gattungsgemäße Vorrichtung zur optischen Distanzmessung in einer schematischen Gesamtübersicht,

Figur 2    ein Ablaufdiagramm mit den wesentlichen, dem erfindungsgemäßen Verfahren zugrundeliegenden Verfahrensschritten.

Figur 3    den schematischen Verlauf der Messunsicherheit eines Messgerätes über der Messdistanz und eine Reihe von exemplarischen dem erfindungsgemäßen Gerät vorgebbaren Kennlinien der Messunsicherheit als Funktion des Messdistanz.

Figur 4    den schematischen Verlauf der Messzeit über der Messdistanz im Falle einer im Wesentlichen konstanten Messunsicherheit und im Falle einer Messung entsprechend den vorgebbaren Kennlinien entsprechend Figur 3

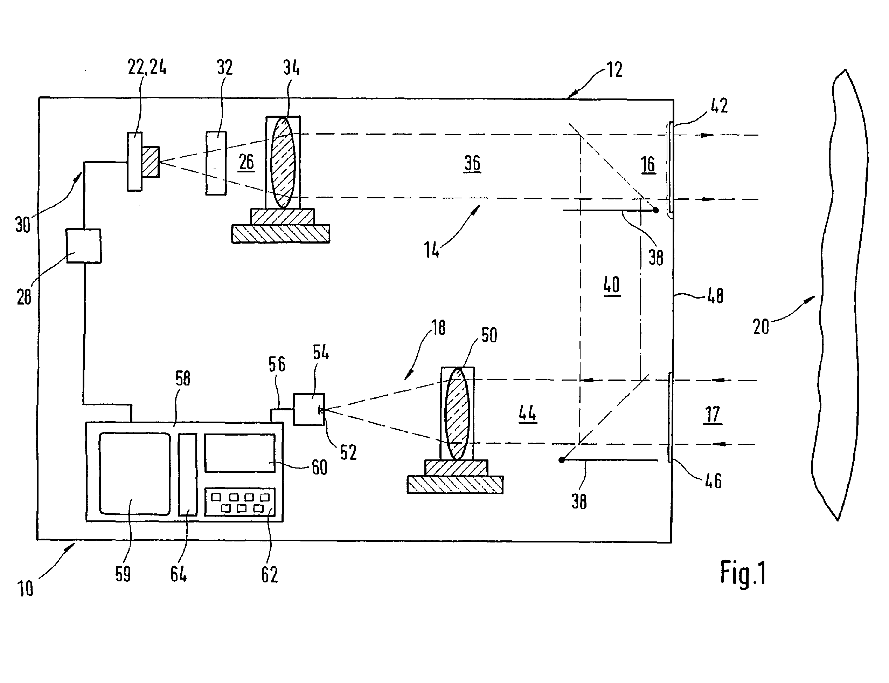

Figur 1 zeigt in schematischer Weise ein gattungsgemäßes Entfernungsmessgerät 10 mit den wichtigsten Komponenten zur Beschreibung seines prinzipiellen Aufbaus. Die Vorrichtung 10 weist ein Gehäuse 12 auf, in dem ein Sendeast 14 zur Erzeugung eines Mess-Signals 16 sowie ein Empfangsast 18 zur Detektion des von einem Zielobjekt 20 rücklaufenden Mess-Signals 17 angeordnet sind. Der Empfangsast 18 bildet einen Empfangskanal für das rücklaufende Mess-Signal 17.

Der Sendeast 14 beinhaltet eine Lichtquelle 22, die im Ausführungsbeispiel der Figur 1 durch eine Halbleiter-Laserdiode 24 realisiert ist. Die Verwendung anderer Lichtquellen, sowie nichtoptischer Sender in der erfindungsgemäßen Vorrichtung ist ebenso möglich.

Die Laserdiode 24 des Ausführungsbeispiels nach der Figur 1 sendet einen Laserstrahl in Form eines für das menschliche Auge sichtbaren Lichtbündels 26 aus. Die Laserdiode 24 wird über ein Steuergerät 28 betrieben, welches durch eine entsprechende Elektronik eine Modulation des elektrischen Eingangssignals 30 auf die Diode 24 erzeugt. Das Steuergerät 28 erhält die benötigten Frequenzsignale zur Modulation von einer Steuer-und Auswerteeinheit 58 des Messgerätes. In anderen Ausführungsbeispielen kann das Steuergerät 28 auch integraler Bestandteil der Steuer- und Auswerteeinheit 58 sein.

Die Steuer- und Auswerteeinheit 58 umfasst eine Schaltungsanordnung 59, die unter Anderem zumindest auch einen Quarzoszillator zur Bereitstellung der benötigten Frequenzsignale aufweist. Mit diesen Signalen, von denen typischerweise mehrere, mit unterschiedlichen Frequenzen während einer Entfernungsmessung genutzt werden, wird das Messsignal in bekannter Weise moduliert. Der prinzipielle Aufbau einer solchen Schaltungsanordnung ist beispielsweise der DE 198 11 550 A1 zu entnehmen und soll daher hier nicht explizit wiederholt werden.

Das aus der Halbleiter-Diode 24 austretende, intensitätsmodulierte Lichtbündel 26 durchläuft eine erste Optik 32, die zu einer Verbesserung des Strahlprofils des Lichtbündels führt. Eine solche Optik kann auch integraler Bestandteil der Laserdiode selbst sein. Das Laserstrahlbündel 26 durchläuft anschließend ein Kollimationsobjektiv 34, welches ein nahezu paralleles Lichtstrahlenbündel 36 erzeugt, welches in Richtung auf das zu vermessende Zielobjekt 20 ausgesendet wird. Im Sendeast 14 der Vorrichtung gemäß Figur 1 befindet sich zudem eine Vorrichtung 38 zur Erzeugung einer geräteinternen Referenzstrecke 40, die der internen Kalibrierung des Messgerätes dient.

Das Mess-Signal 16 wird durch ein optisches Fenster 42 aus dem Gehäuse 12 der Vorrichtung 10 ausgekoppelt. Zur Messung wird die Vorrichtung 10 auf ein Zielobjekt 20 ausgerichtet, dessen Entfernung zum Messgerät ermittelt werden soll. Das an dem gewünschten Zielobjekt 20 reflektierte oder auch gestreute Signal 17 bildet ein rücklaufendes Messstrahlenbündel 44, das zu einem gewissen Teil wieder in die Vorrichtung 10 gelangt. Durch ein Eintrittsfenster 46 in der Stirnseite 48 der Vorrichtung 10 wird die rücklaufende Messstrahlung 17 in das Messgerät eingekoppelt und auf ein Empfangsobjektiv 50 gelenkt. Das Empfangsobjektiv 50 bündelt das rücklaufende Messstrahlenbündel 44 auf die aktive Fläche 52 einer Empfangseinrichtung 54.

Diese Empfangseinrichtung 54 kann beispielsweise ein Flächendetektor oder eine Fotodiode, beispielsweise auch eine direktmischende Avalanche- Fotodiode bekannter Art sein. Die aktive Fläche 52 der Empfangseinrichtung 54 ist ein entsprechendes Detektionselement. Die Empfangseinrichtung 54 wandelt das einkommende Lichtsignal 17 in ein elektrisches Signal um, welches dann über entsprechende Verbindungsmittel 56 an eine Steuer- und Auswerteeinheit 58 der Vorrichtung 10 weitergeleitet wird. Die Steuer- und Auswerteeinheit 58 ermittelt aus dem rücklaufenden optischen Signal 17 und insbesondere aus der dem rücklaufenden Signal aufgeprägten Phasenverschiebung im Vergleich zum ursprünglich ausgesendeten Signal, die gesuchte Distanz zwischen der Vorrichtung 10 und dem Zielobjekt 20 und zeigt diese beispielsweise in einer optischen Anzeigevorrichtung 60 des Messgerätes an.

Bei der Laserentfernungsmessung mittels Phasenverschiebungsmessung an amplitudenmoduliertem Licht ist die Phasenverschiebung zwischen dem vom Zielobjekt 20 rücklaufenden und im Detektor 54 empfangenen Licht und dem vom Messgerät 10 in Richtung auf das Zielobjekt 20 ausgesandten Licht gegeben durch:

$$\varphi = \frac{2\pi * f}{c} * 2d \qquad (1)$$

Dabei bezeichnet φ die dem Lichtsignal aufgeprägte Phasenverschiebung aufgrund einer Distanz d zwischen dem Messgerät 10 und dem Zielobjekt 20, f die

Modulationsfrequenz des amplitudenmodulierten Mess-Signals und c die Phasengeschwindigkeit (Lichtgeschwindigkeit) des benutzten Mess-Signals.

Genauigkeitsbestimmend bei der Ermittlung der Distanz d des Messgerätes 10 zum Zielobjekt 20 bei der Laserentfernungsmessung mittels Phasenverschiebungsmessung ist das Signal-Rausch-Verhältnis des verwendeten Mess-Signal.

Die Messunsicherheit $\Delta\varphi$ bei einer Phasenmessung ist gegeben durch:

$$\Delta\varphi = \frac{1}{\sqrt{2 * \dfrac{S}{N}}} \qquad (2)$$

Das die Messunsicherheit bestimmende Signal-Rausch-Verhältnis S/N lässt sich beispielsweise ermitteln aus einer Amplitudenmessung des Modulationssignal und dem Gleichanteil des Umgebungslichtes, der zu einem entsprechenden Rauschen im Mess-Signal führt.

Da das Signal-Rausch-Verhältnis grundsätzlich gemessen werden kann, ist es erfindungsgemäß auch möglich, eine Entfernungsmessung so zu beeinflussen, dass beispielsweise durch eine Anpassung der Messzeit ein vorgegebener Zielwert für das Signal-Rausch-Verhältnis S/N und damit für die Messunsicherheit $\Delta\varphi$ in der Phasenmessung erreicht wird. Die Vorgabe des Signal--Rausch-Verhältnisses, welches bei einer Messung erreicht werden soll, kann bei dem erfindungsgemäßen Verfahren wahlweise vom Benutzer indirekt, in Form einer vorgewählten Messzeit, beispielsweise über ein Bedienfeld 62 der Steuer- und Auswerteeinheit 58 des Messgerätes 10 oder aber oder auch automatisch bzw. halbautomatisch in optimierter Weise vom Messgerät selbst eingestellt werden.

So kann beispielsweise durch eine kurze, dem eigentlichen Messvorgang vorgelagerte Entfernungsmessung eine fehlerbehaftete Grobabschätzung der gesuchten Entfernung durchgeführt werden, der eine genauere Messung nachgeordnet ist, die jedoch mit einer, dem groben Entfernungsbereich angepassten Anforderung an die Messunsicherheit und damit an das Signal-Rausch-Verhältnis S/N durchgeführt wird.

Auch kann aus einer Reihe von Distanzmessungen eine Teilmenge ausgewählt werden, um aufgrund dieser Ergebnisse die Messunsicherheit, beispielsweise der ermittelten Messweite anzupassen. Da zur Ermittlung einer Distanz immer mehrere, einzelne Messungen, beispielsweise mit unterschiedlichen Frequenzen durchgeführt werden, können solche Einzelmessungen ausgenutzt werden, um Informationen zur Einstellung der Messunsicherheit durchzuführen. Das heisst die Messunsicherheit kann auch während der Ermittlung einer Distanz der Messaufgabe angepasst und optimiert werden.

Alternativerweise kann innerhalb einer vorgegebenen maximalen Messzeit der dem Messgerät zugängliche Messbereich dadurch erweitert werden, dass die Signal-Rausch-Verhältnis Anforderungen über der Entfernung zurückgenommen werden. Dies kann speziell im Außenbereich bei starker Sonneneinstrahlung, die zu einem erhöhten Rauschpegel führt, zu einer deutlichen Steigerung der mit der erfindungsgemäßen Messgerät 10 möglichen Messweite und damit der Nutzbarkeit des erfindungsgemäßen Messgerätes führen. Die mit zunehmender Entfernung abnehmende Genauigkeit der Entfernungsmessung kann durch Reduzierung der Anzeigenauflösung bei der Darstellung des Messergebnisses im Display 60 des Messgerätes 10 visualisiert und dem Nutzer mitgeteilt werden.

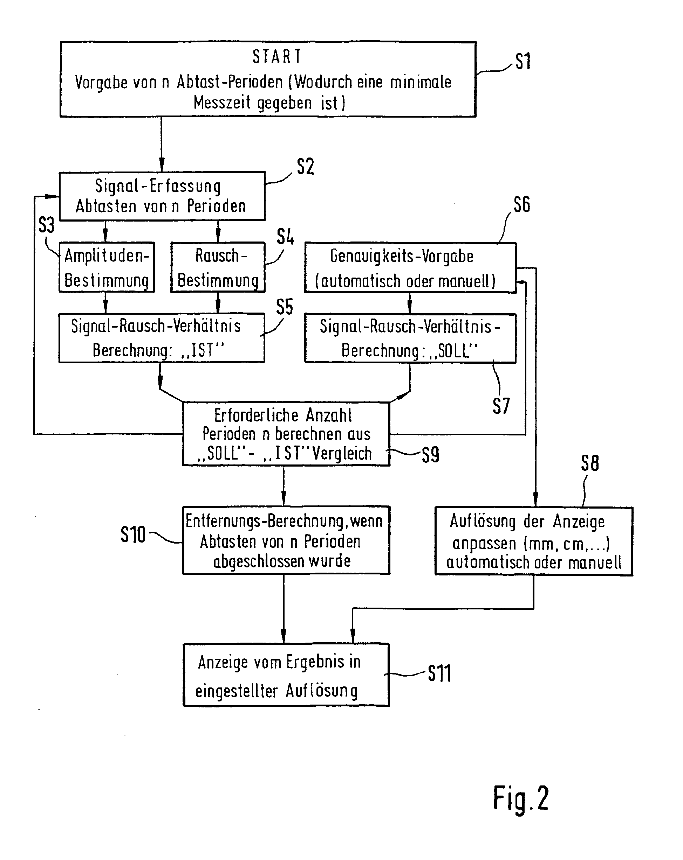

Figur 2 zeigt ein Ausführungsbeispiel der wesentlichen Schritte des erfindungsgemäßen Verfahrens anhand eines Flussdiagramms einzelner Verfahrensschritte.

Zu Beginn des Verfahrens wird in Verfahrensschritt S 1 eine Messzeit für die anliegende Entfernungsmessung definiert. Dies wird geräteintern übersetzt in eine Vorgabe für die Anzahl n der Abtastperioden des modulierten Mess-Signals, welche zur Auswertung des Mess-Signals durch die Auswerteeinheit herangezogen werden.. Die gewünschte Messzeit kann dem Messgerät beziehungsweise der Auswerteeinheit des Messgerätes vom Nutzer manuell, beispielsweise über das Bedienfelde 62 oder auch automatisch durch eine entsprechende Routine der Steuer- und Auswerteeinheit 58 des Gerät 10 selbst übermittelt werden.

Nach Vorgabe der Messzeit wird eine Messung, beispielsweise durch Betätigung einer entsprechenden "Start-Taste" des Bedienfeldes 62 des Messgerätes 10, gestartet , ein Mess-Signal 16 vom Gerät daraufhin in Richtung des anvisierten Zielobjektes 20 ausgesendet und das am Zielobjekt 20 reflektierte Messsignal 17 wiederum durch das Messgerät detektiert. Aus bekannten und beispielsweise auch in der DE 198 11 550 A1 aufgeführten Gründen kann es vorteilhaft sein, diese Messprozedur mit Mess-Signalen unterschiedlicher Frequenz zu wiederholen. Zur Vereinfachung der weiteren Beschreibung des erfindungsgemäßen Verfahrens wird nachfolgend nur das Verfahren für jeweils eine Frequenz beschrieben.

Das amplitudenmodulierte Mess-Signal wird - im Verfahrensschritt S2 - entsprechend der zuvor gewählten Messzeit über eine Dauer von n Perioden erfasst und weiterverarbeitet. Aus dem auf den Empfangsdetektor 54 fallenden Mess-Signal wird in Verfahrensschritt S3 die Amplitude des detektierten Mess-Signals bestimmt sowie in einem parallelen oder seriellen Verfahrensschritt S4 der im Mess-Signal enthaltene Rauschanteil ermittelt.

Das aus der Amplitudenbestimmung gewonnene Signal wird in Verfahrensschritt S5 gemäß Figur 2 zu dem im Verfahrensschritt S4 ermittelten Rauschanteil ins Verhältnis gesetzt und so das der durchgeführten Messung zugrundeliegende Signal-Rausch-Verhältnis S/N errechnet.

In einem zum Messvorgang parallelen Verfahrensschritt S6 wird dem Messgerät eine gewünschte, theoretische Genauigkeitsvorgabe in Form der Messunsicherheit übermittelt.

Dies kann durch manuelle Eingabe des Nutzers vor der eigentlichen Messung, als auch durch eine automatische bzw. halbautomatische Vorgabe des Messgerätes selbst erfolgen. So kann das Messgerät beispielsweise auch auf einen geräteinternen Speicher zugreifen, in dem Werte für die Messunsicherheit abgelegt sind. Diese Werte können beispielsweise in Abhängigkeit von Distanzbereichen abgelegt sein, so dass bei einer Messung im Bereich von 1m bis 3m eine kleinere Messunsicherheit verwendet wird, als beispielsweise im Bereich von 5m bis 20m oder im Bereich von 20m bis 100m. Auch können verschiedene Kennlinien im Messgerät selbst abgelegt sein, die unterschiedliche funktionale Zusammenhänge zwischen der der Messung zugrunde liegenden Messunsicherheit und der zu messenden Distanz widerspiegeln.

Aus der Genauigkeitsvorgabe des Verfahrensschritt S6, dass heisst aus der gewählten Messunsicherheit, wird in Verfahrensschritt S7 das zugehörige, notwendige Signal-Rausch-Verhältnis, welches es zur Erreichung der Messunsicherheit gemäß Verfahrensschritt S6 einzuhalten gilt, berechnet.

Durch Verwendung entsprechender Sensoren kann die zu verwendende Messunsicherheit den Umgebungsparameter angepasst werden. So kann beispielsweise unter Beachtung des Niveaus des Untergrundsignales und der gewünschten Messzeit, eine angepasste Messunsicherheit auswählt werden, das heisst, es kann ein Signal-Rausch-Verhältnis vorgegeben werden, bis zu dem gemessen werden soll. Bei den Umgebungsparametern muss es sich nicht zwangsläufig um rein optische Umgebungsparameter handeln. So kann auch durch entsprechende Sensoren jede andere Art von Strahlung, beispielsweise "Handy-Störungen" oder Radar-Signale oder "Elektro-Smog", detektiert werden, die eventuell einen Einfluss auf das Signal zu Rausch-Verhältnis haben könnten. Über die Steuer- und Auswerteeinheit des Gerätes kann dann die Messunsicherheit in noch zu beschreibenden Weise eingestellt werden.

Gleichzeitig wird im Verfahrensschritt S8 die Auflösung der Anzeige 60 des Messgerätes 10 automatisch von der zentralen Steuer- und Auswerteeinheit 58 des erfindungsgemäßen Messgerätes 10 an die Genauigkeitsvorgabe gemäß Verfahrensschritt S6 angepasst. So kann beispielsweise durch Reduzierung der Dezimalstellen in der Darstellung der Messergebnisse dem Nutzer übermittelt werden, welche Messgenauigkeit beziehungsweise Messunsicherheit der durchgeführten Messung zugrunde gelegen hat.

So ist es beispielsweise auch möglich über entsprechende Bedientasten im Bedienfeld 62 des Messgerätes 10 die Dezimalen der Anzeige - beispielsweise vor einer Messung - anzugeben und damit direkt an die Steuer- und Auswerteeinheit 58 zu übermitteln, mit welcher Messunsicherheit die nachfolgende Distanzmessung durchgeführt werden soll. Das Gerät kann dann beispielsweise auch eine abgelegte Kennlinie aufrufen. Auch ist es möglich dem Gerät vorzugeben in welchem Entfernungsbereich die sich anschließende Distanzmessung liegen wird, so dass eine entsprechende Messungenauigkeit vom Gerät halbautomatisch ausgewählt werden kann.

Im Verfahrensschritt S9 wird ein Vergleich durchgeführt, zwischen dem gewünschten Signal-Rausch-Verhältnis "S/N-SoH" gemäß Verfahrensschritt S7 und dem bei der tatsächlichen Messung zugrundeliegenden Signal-Rausch-Verhältnis "S/N-Ist". Entspricht der gemessene Ist-Wert des Signal-Rausch-Verhältnisses nicht den Vorgaben des Soll-Weites gemäß Verfahrensschritt S6, so wird die notwendige Messzeit zur Erreichung des Soll-Wertes errechnet und daraus beispielsweise die erforderliche Anzahl der Messperioden n für die Auswerteeinheit ermittelt. Das Verfahren verzweigt in diesem Fall zurück zu Verfahrensschritt S2, sodass eine erneute Messung mit der nun angepassten Messzeit gestartet bzw. die laufende Messung mit der nun angepassten Anzahl von Abtastperioden durchgeführt beziehungsweise fortgeführt wird.

Sollte sich dabei herausstellen, dass die notwendige Messzeit, die für die entsprechende Distanzmessung mit der geforderten Messunsicherheit benötigt wird, zu groß ist, beziehungsweise eine vorgegebene Messzeit überschritten würde, so ist vorgesehen, dass das Messgerät automatisch die Messunsicherheit hochsetzt. In diesem Fall verzweigt das Verfahren zurück zu Verfahrensschritt S 6, in dem die Vorgabe der Messunsicherheit geschieht. Die Entscheidung im Verfahrensschritt S6 kann dann beispielsweise durch die Auswahl einer anderen Kennlinie der Messunsicherheit als Funktion der Distanz erfolgen oder auch durch die Vorgabe eines festen Wertes für die Messunsicherheit. Das erfindungsgemäße Messgerät kann beispielsweise dazu auch die einzelnen Kennlinien der Messunsicherheit nacheinander "durchschalten", um diejenige Messunsicherheit zu finden, die gerade noch eine Messung in der gewünschten Messzeit ermöglicht.

Entspricht das gemessene Signal-Rausch-Verhältnis "S/N-Ist" dem gewünschten Signal-Rausch-Verhältnis "S/N-Soll", so wird aus der über n Perioden des modulierten Mess-Signales ermittelten Phasenverschiebung in bekannter Weise die Entfernung zwischen dem Messgerät und dem Zielobjekt in Verfahrensschritt S10 ermittelt. Dabei kann beispielsweise das in der DE 198 11 550 A1 offenbarte Verfahren zur Entfernungsmessung Verwendung finden.

Im abschließenden Verfahrensschritt S11 wird die von der Auswerteeinheit 58 ermittelte Distanz zwischen dem Messgerät 10 und dem Zielobjekt 20 in der Anzeige 60 des Messgerätes 10 dargestellt, wobei zur Verdeutlichung der der Messung zugrundeliegenden Messunsicherheit die Genauigkeit des dargestellten Entfernungswertes der der vorgegebenen Messunsicherheit entsprechenden Auflösung entspricht.

Das erfindungsgemäße Verfahren lässt sich als entsprechende Routine in Form eines Steuerprogramms beispielsweise in der Steuer- und Auswerteeinheit 58 eines Entfernungsmessers 10 ablegen, so dass auch eine automatische oder auch halbautomatische Variation der Messunsicherheit vom Gerät selbst, in Abhängigkeit von den Messparametern, durchgeführt werden kann. Die entsprechenden Kennlinien können dazu in einem Speichermedium abgelegt sein und von der Steuer- und Auswerteeinheit ausgelesen werden.

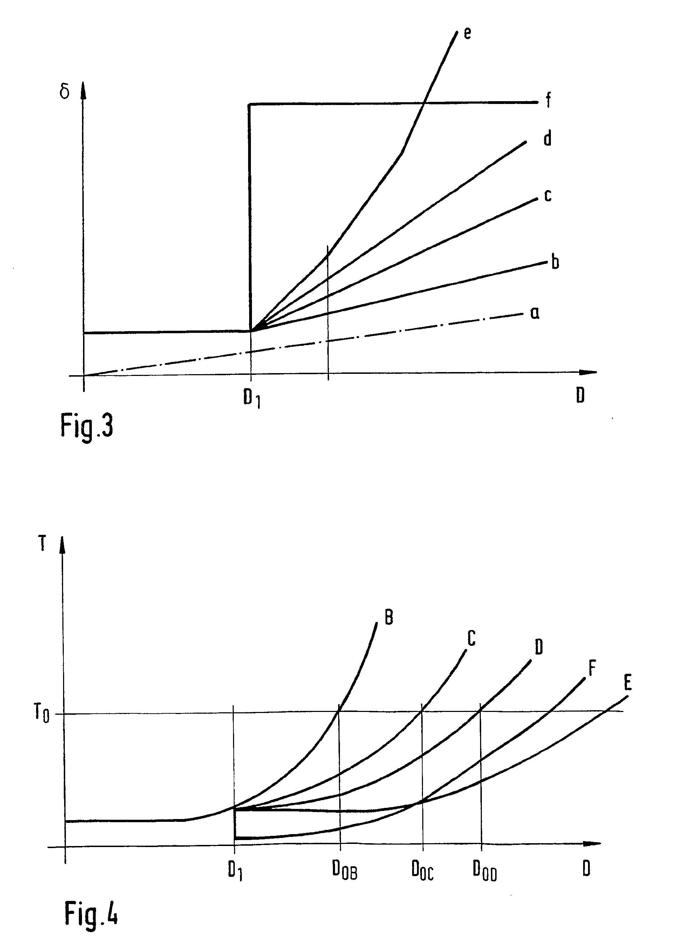

Figur 3 zeigt in schematischer Weise verschiedene Beispiele von Kurven für die einer Entfernungsmessung zugrunde zu legende Messunsicherheit δ als Funktion einer Messdistanz D. Die Kurve a gibt dabei die Messunsicherheit wieder, die sich allein aufgrund des systematischen Fehlers des Schwingquarzes ergibt, der die Messfrequenzen des Gerätes definiert. Wie beispielsweise der Gleichung (1) zu entnehmen ist, führen Schwankungen in der Frequenz des Messsignals auch zu entsprechenden Phasenverschiebungen im Signal, die sich in Fehlern für die daraus bestimmte Distanz niederschlagen und somit zur Messunsicherheit beitragen. Diese, in Kurve a wiedergegebene Messunsicherheit ist somit eine geräteinterne Messunsicherheit und kann lediglich durch Auswahl qualitativ hochwertiger elektronischer Komponenten für das Messgerät optimiert werden.

Kurve b zeigt die Messunsicherheit, die sich bei Vorliegen eines zusätzlichen statistischen Fehlers aufgrund eines festen Signal-Rausch-Verhältnisses S/N ergibt. Die Kurve b gibt somit in etwa die mit einem Messgerät erreichbare minimale Messunsicherheit als Funktion der Messdistanz D wieder.

Die Kurven c, d, e und f zeigen mögliche Kennlinien für die Messunsicherheit, wie sie im erfindungsgemäßen Gerät abgelegt sein können. Die Kennlinien können auch einen nichtlinearen Funktionsverlauf haben und sind nicht auf die in der Figur 3 dargestellten funktionalen Abhängigkeiten beschränkt. Dabei kann dass Messgerät bei einer Entfernungsmessung beispielsweise sukzessive durch diese Kennlinien "durchschalten", um eine eventuell vorgegebene Messzeit $T_0$ nicht zu überschreiten. Eine Optimierungsroutine in der Steuer- und Auswerteeinheit des Messgerätes kann dann für eine bestimmte Messdistanz diejenige Kennlinie auswählen, die unter Berücksichtigung der benötigten Messzeit für diese Entfernungsmessung, den optimalen Kompromiss zwischen Messzeit und Messungenauigkeit darstellt.

Figur 4 zeigt in ebenfalls vereinfachter, schematischer Darstellung, die den Kennlinien b bis e der Figur 3 entsprechenden Messzeiten B bis E als Funktion der gemessenen Distanz D. Wie deutlich zu erkennen ist, kann durch die Auswahl, das heisst durch die freie Vorgabe einer Messunsicherheit an dass Gerät oder durch das Gerät selbst, der Distanzbereich $D_0$, der in einer gewissen Messzeit $T_0$ noch zu messen ist, deutlich erweitert werden. Die dem Gerät vorgebbare Messunsicherheit kann dabei auch deutlich über der Messunsicherheit liegen, die als gerätebedingt vorgegeben ist, wie beispielsweise der Figur 3 zu entnehmen ist.

Das erfindungsgemäße Verfahren sowie die entsprechende erfindungsgemäße Vorrichtung ermöglichen es somit, den mit einem Messgerät zur Entfernungsmessung nutzbaren Entfernungsbereich, das heisst, denjenigen Entfernungsbereich, über den eine Distanzmessung mit den Gerät möglich ist, mit einfachen Mitteln zu erweitern.

Das erfindungsgemäße Verfahren sowie die erfindungsgemäße Vorrichtung zur Durchführung dieses Verfahrens sind in dem Ansprüchen definiert.

Das erfindungsgemäße Verfahren und das entsprechende Messgerät zur Durchführung des Verfahrens sind nicht beschränkt auf die Verwendung eines Phasenmessprinzips. Entfernungsmessgeräte, die beispielsweise nach dem Laufzeitprinzip arbeiten, können ebenfalls von dem erfindungsgemäßen Verfahren Gebrauch machen.

Des Weiteren ist das erfindungsgemäße Verfahren nicht auf die Verwendung in optischen Entfernungsmessern beschränkt. Das erfindungsgemäße Verfahren kann ebenso beispielsweise Anwendung finden in Ultraschallgeräten zur Entfernungsmessung.

### Patentansprüche

**1.** Vorrichtung zur Distanzmessung, mit zumindest einem Sendeast (14) mit mindestens einem Sender (22,24) zur Aussendung modulierter Messstrahlung (16,26,36) in Richtung auf ein Zielobjekt (20), und mit mindestens einem Empfangsast (18) zum Empfang der vom Zielobjekt (20) rücklaufenden Messstrahlung (17,44), sowie mit einer Steuer- und Auswerteeinheit (28,58) zur Ermittlung der Distanz der Vorrichtung zum Zielobjekt (20), **dadurch gekennzeichnet, dass** die Vorrichtung Mittel aufweist, zum Vorgeben des jeweiligen Wertes der Messunsicherheit, der einer Messung der Distanz zu einem Zielobjekt zugrunde zu legen ist.

**2.** Vorrichtung nach Anspruch 1, **dadurch gekennzeichnet, dass** die Mittel derart ausgebildet sind, dass die einer Distanzmessung zugrunde zu legende Messunsicherheit in Abhängigkeit von der Messweite zum Zielobjekt (20) und/oder von der Messzeit der Distanzmessung einstellbar ist.

**3.** Vorrichtung nach Anspruch 1 oder 2, **dadurch gekennzeichnet, dass** die Vorrichtung ein Speichermedium (64) aufweist, in dem die einer Distanzmessung zugrunde zu legende Messunsicherheit datenmäßig, insbesondere in Form mindestens einer Kennlinie abgelegt ist.

**4.** Vorrichtung nach Anspruch 3, **dadurch gekennzeichnet, dass** das Speichermedium eine Mehrzahl von Kennlinien für die Messunsicherheit, insbesondere Kennlinien (a,b,c,d,e,f) der Messunsicherheit als Funktion der Messweite, aufweist, die über Bedienelemente (62) des Messgerätes für eine Distanzmessung abrufbar sind.

**5.** Vorrichtung nach Anspruch 3, **dadurch gekennzeichnet, dass** das Speichermedium (62) eine Mehrzahl von Kennlinien für die Messunsicherheit, insbesondere Kennlinien (a,b,c,d,e,f) der Messunsicherheit als Funktion der Messweite, aufweist, die von der Steuer- und Auswerteeinheit (28,58) des Messgerätes wahlweise oder sukzessive für eine Distanzmessung abrufbar sind.

**6.** Vorrichtung nach einem der vorhergehenden Ansprüche, **dadurch gekennzeichnet, dass** die Vorrichtung Mittel aufweist, die es ermöglichen, dass die einer Distanzmessung zugrunde zu legende Messunsicherheit durch die Vorgabe eines Signal-zu-Rausch-Verhältnisses, insbesondere eines Signal-zu-Rausch-Verhältnisses des Messsignals, an die Steuer- und Auswerteeinheit (28,58) der Vorrichtung einstellbar ist.

**7.** Vorrichtung nach Anspruch 6, **dadurch gekennzeichnet, dass** die Vorrichtung Mittel aufweist, die es gestatten, dass der bei einem Messvorgang zu erreichende Wert des Signal-zu-Rausch-Verhältnisses dem Gerät vor einem Messvorgang vorgebbar ist.

**8.** Vorrichtung nach Anspruch 6 oder 7, **dadurch gekennzeichnet, dass** die Vorrichtung Mittel aufweist, die es gestatten, dass mindestens ein Messparameter aus einer Gruppe von Parametern, die zumindest die Messzeit der Vorrichtung für eine Distanzmessung sowie die Messunsicherheit der Vorrichtung für eine Distanzmessung umfasst, vom Nutzer der Vorrichtung quantitativ vorwählbar ist, so dass die anderen Messparameter dieser Gruppe mittels der Elektronik des Messgerätes halbautomatisch derart angepasst werden, dass ein vorgebbarer Wert eines Signal-zu-Rausch-Verhältnisses einer Messgröße, insbesondere des Signal-zu-Rausch-Verhältnisses des Messsignals, bei einem Messvorgang erreicht wird.

**9.** Vorrichtung nach Anspruch 6 oder 7, **dadurch gekennzeichnet, dass** die Vorrichtung Mittel aufweist, die es gestatten, einen Parametersatz, der zumindest die Messzeit für eine Distanzmessung mittels der Vorrichtung und die Messunsicherheit der Vorrichtung für eine Distanzmessung enthält, vollautomatisch der jeweiligen Messentfernung und/oder den Umgebungsbedingungen, insbesondere dem Reflexionsvermögen eines Zielobjektes und /oder der Stärke des Umgebungslichtes, derart anzupassen, dass ein vorgebbarer Wert eines Signal-zu-Rausch-Verhältnisses, insbesondere des Signal-zu-Rausch-Verhältnisses des Messsignals bei einer Entfernungsmessung erreicht wird.

10. Vorrichtung nach einem der Ansprüche 6 bis 9, **dadurch gekennzeichnet, dass** die Vorrichtung Mittel aufweist, die es ermöglichen, dass der vorgebbare Grenzwert des Signal-zu-Rausch-Verhältnisses für eine Distanzmessung durch eine erste, der eigentlichen Distanzmessung zeitlich vorgeschalteten Messung der Entfernung mit einer erhöhten Messunsicherheit ermittelt werden kann.

11. Vorrichtung nach einem der Ansprüche 6 bis 9, **dadurch gekennzeichnet, dass** die Vorrichtung Mittel aufweist, die es ermöglichen, dass der vorgebbare Grenzwert des Signal-zu-Rausch-Verhältnisses für eine Distanzmessung durch Teilergebnisse einer Messreihe von Distanzmessungen gewonnen werden kann.

12. Vorrichtung nach einem der vorhergehenden Ansprüche, **dadurch gekennzeichnet, dass** die Vorrichtung eine Ausgabeeinheit, insbesondere eine Anzeigeeinheit (60), aufweist, die die Wiedergabe der bei einer Distanzmessung verwendeten Messunsicherheit und/oder die Wiedergabe der Entfernmigsauflöswig der Vorrichtung ermöglicht

13. Vorrichtung nach einem der vorhergehenden Ansprüche, **dadurch gekennzeichnet, dass** die Vorrichtung eine Ausgabeeinheit, insbesondere eine Anzeigeeinheit (60), aufweist, die das Messergebnis einer Distanzmessung mit den der Messungenauigkeit entsprechenden Dezimalen des Messwertes der Distanz darstellbar macht.

14. Vorrichtung nach einem der vorhergehenden Ansprüche, **dadurch gekennzeichnet, dass** der Sender der Vorrichtung zumindest eine Lichtquelle (22), insbesondere zumindest einen Laser (24) aufweist.

15. Verfahren zur Distanzmessung, bei dem zumindest ein Sendeast (14) eines Messgerätes (10) modulierte Messstrahlung (16,26,36) in Richtung auf ein Zielobjekt (20) aussendet, die vom Zielobjekt (20) reflektierte und rücklaufenden Messstrahlung (17,44) im Messgerät (10) detektiert wird, und aus dem reflektierten Mess-Signal die Distanz des Messgerätes (10) zu dem Zielobjekt (20) ermittelbar ist, **dadurch gekennzeichnet, dass** der jeweilige Wert der Messunsicherheit, der einer Messung der Distanz zu einem Zielobjekt zugrunde zu legen ist, dem Messgerät vorgegeben wird.

16. Verfahren zur Distanzmessung nach Anspruch 15, **dadurch gekennzeichnet, dass** der, einer Distanzmessung zugrunde zu legende Wert für die Messunsicherheit in Abhängigkeit der Messweite zum Zielobjekt (20) und/oder der Messzeit der Distanzmessung einstellbar ist.

17. Verfahren zur Distanzmessung nach Anspruch 15 oder 16, **dadurch gekennzeichnet, dass** der einer Distanzmessung zugrunde zu legende Wert der Messunsicherheit durch die Vorgabe eines Wertes eines Signal-zu-Rausch-Verhältnisses, insbesondere des Signal-zu-Rausch-Verhältnisses des Messsignals, welches bei einem Messvorgang erreicht werden soll, erfolgt.

18. Verfahren zur Distanzmessung nach Anspruch 17, **dadurch gekennzeichnet, dass** der vorgebbare Grenzwert des Signal-zu-Rausch-Verhältnisses für eine Distanzmessung durch eine erste, der eigentlichen Distanzmessung zeitlich vorgeschalteten Messung der Entfernung mit einer erhöhten Messunsicherheit ermittelt wird.

19. Verfahren zur Distanzmessung nach Anspruch 17, **dadurch gekennzeichnet, dass** der vorgebbare Grenzwert des Signal-zu-Rausch-Verhältnisses für eine Distanzmessung durch Teilergebnisse einer Messreihe von Distanzmessungen gewonnen wird.

20. Verfahren zur Distanzmessung nach einem der Ansprüche 15 bis 18, **dadurch gekennzeichnet, dass** der einer Distanzmessung zugrunde zu legende Wert für die Messunsicherheit in Form einer oder mehrerer Kennlinie im Messgerät abgelegt ist und vom Gerät automatisch und/oder von einem Anwender des Gerätes abrufbar und/oder auswählbar ist.

21. Verfahren zur Distanzmessung nach Anspruch 19, **dadurch gekennzeichnet, dass** der einer Distanzmessung zugrunde zu legende Wert für die Messunsicherheit durch die Auswahl einer im Gerät abgelegten Kennlinie optimiert wird.

22. Verfahren zur Distanzmessung nach Anspruch 20, **dadurch gekennzeichnet, dass** der, einer Distanzmessung zugrunde zu legende Wert für die Messunsicherheit nach Vorgabe einer maximalen Messzeit für die Entfernungsmessung durch die Auswahl einer Kennlinie (a,b,c,d,e,f) für die Messunsicherheit optimiert wird.

23. Verfahren zur Distanzmessung nach einem der vorhergehenden Ansprüche 15 bis 21, **dadurch gekennzeichnet, dass** der Wert für die Messunsicherheit bei der Distanzmessung schrittweise solange erhöht wird, bis die Distanzmessung in einer vorgegebenen Zeit möglich ist.

## Claims

1. Apparatus for measuring distance, having at least one transmission branch (14) with at least one transmitter (22, 24) for emitting modulated measurement radiation (16, 26, 36) in the direction of a target object (20), and having at least one reception branch (18) for receiving the measurement radiation (17, 44) returning from the target object (20), and having a control and evaluation unit (28, 58) for ascertaining the distance between the apparatus and the target object (20), **characterized in that** the apparatus has means for prescribing that respective value of the measurement uncertainty on which a measurement of the distance to a target object needs to be based.

2. Apparatus according to Claim 1, **characterized in that** the means are in a form such that the measurement uncertainty on which a distance measurement needs to be based can be set on the basis of the measurement range to the target object (20) and/or the measurement time of the distance measurement.

3. Apparatus according to Claim 1 or 2, **characterized in that** the apparatus has a storage medium (64) which stores the measurement uncertainty on which a distance measurement needs to be based in terms of data, particularly in the form of at least one characteristic curve.

4. Apparatus according to Claim 3, **characterized in that** the storage medium has a plurality of characteristic curves for the measurement uncertainty, particularly characteristic curves (a, b, c, d, e, f) of the measurement uncertainty as a function of the measurement range, which are able to be retrieved using operator control elements (62) of the measurement appliance for a distance measurement.

5. Apparatus according to Claim 3, **characterized in that** the storage medium (62) has a plurality of characteristic curves for the measurement uncertainty, particularly characteristic curves (a, b, c, d, e, f) of the measurement uncertainty as a function of the measurement range, which are able to be retrieved by the control and evaluation unit (28, 58) of the measurement appliance selectively or successively for a distance measurement.

6. Apparatus according to one of the preceding claims, **characterized in that** the apparatus has means which allow the measurement uncertainty on which a distance measurement needs to be based to be set by prescribing a signal-to-noise ratio, particularly a signal-to-noise ratio of the measurement signal, to the control and evaluation unit (28, 58) of the apparatus.

7. Apparatus according to Claim 6, **characterized in that** the apparatus has means which allow the value of the signal-to-noise ratio which needs to be reached for a measurement process to be prescribed to the appliance before a measurement process.

8. Apparatus according to Claim 6 or 7, **characterized in that** the apparatus has means which allow at least one measurement parameter from a group of parameters which comprises at least the measurement time of the apparatus for a distance measurement and also the measurement uncertainty of the apparatus for a distance measurement to be quantitatively preselected by the user of the apparatus, so that the other measurement parameters of this group are semi-automatically adapted by means of the electronics of the measurement appliance such that a prescribable value of a signal-to-noise ratio of the measured variable, particularly the signal-to-noise ratio of the measurement signal, is reached for a measurement process.

9. Apparatus according to Claim 6 or 7, **characterized in that** the apparatus has means which allow a parameter set which contains at least the measurement time for a distance measurement by means of the apparatus and the measurement uncertainty of the apparatus for a distance measurement to be fully automatically adapted to the respective measurement range and/or to the ambient conditions, particularly to the reflectivity of a target object and/or to the level of the ambient light, such that a prescribable value of a signal-to-noise ratio, particularly of the signal-to-noise ratio of the measurement signal, is reached for a range measurement.

10. Apparatus according to one of Claims 6 to 9, **characterized in that** the apparatus has means which allow the prescribable limit value of the signal-to-noise ratio to be ascertained for a distance measurement by a first measurement, which is ahead of the actual distance measurement in time, of the range with an increased measurement uncertainty.

11. Apparatus according to one of Claims 6 to 9, **characterized in that** the apparatus has means which allow the prescribable limit value of the signal-to-noise ratio for a distance measurement to be obtained by virtue of partial results from a measurement series of distance measurements.

12. Apparatus according to one of the preceding claims, **characterized in that** the apparatus has an output unit, particularly a display unit (60), which allows the measurement uncertainty used for a distance measurement to be reproduced and/or the range resolution of the apparatus to be reproduced.

13. Apparatus according to one of the preceding claims, **characterized in that** the apparatus has an output unit, particularly a display unit (60), which makes it possible to present the measurement result of a distance measurement with the decimals for the measured value of the distance which correspond to the measurement inaccuracy.

14. Apparatus according to one of the preceding claims, **characterized in that** the transmitter of the apparatus has at least one light source (22), in particular at least one laser (24).

15. Method for measuring distance, in which at least one transmission branch (14) of a measurement appliance (10) emits modulated measurement radiation (16, 26, 36) in the direction of a target object (20), the measurement radiation (17, 44) reflected by and returning from the target object (20) is detected in the measurement appliance (10), and the reflected measurement signal can be used to ascertain the distance between the measurement appliance (10) and the target object (20), **characterized in that that** respective value of the measurement uncertainty on which a measurement of the distance to a target object needs to be based is prescribed to the measurement appliance.

16. Method for measuring distance according to Claim 15, **characterized in that that** value for the measurement uncertainty on which a distance measurement needs to be based can be set on the basis of the measurement range to the target object (20) and/or the measurement time of the distance measurement.

17. Method for measuring distance according to Claim 15 or 16, **characterized in that that** value of the measurement uncertainty on which a distance measurement needs to be based is obtained by prescribing a value for a signal-to-noise ratio, in particular for the signal-to-noise ratio of the measurement signal, which needs to be reached for a measurement process.

18. Method for measuring distance according to Claim 17, **characterized in that** the prescribable limit value for the signal-to-noise ratio for a distance measurement is ascertained by virtue of the first measurement, which is ahead of the actual distance measurement in time, of the range with an increased measurement uncertainty.

19. Method for measuring distance according to Claim 17, **characterized in that** the prescribable limit value for the signal-to-noise ratio for a distance measurement is obtained by means of partial results of a measurement series of distance measurements.

20. Method for measuring distance according to one of Claims 15 to 18, **characterized in that that** value for the measurement uncertainty on which a distance measurement needs to be based is stored in the measurement appliance in the form of one or more characteristic curves and can be retrieved and/or selected by the appliance automatically and/or by a user of the appliance.

21. Method for measuring distance according to Claim 19, **characterized in that that** value for the measurement uncertainty on which a distance measurement needs to be based is optimized by means of the selection of a characteristic curve stored in the appliance.

22. Method for measuring distance according to Claim 20, **characterized in that that** value for the measurement uncertainty on which a distance measurement needs to be based is optimized by means of the selection of a characteristic curve (a, b, c, d, e, f) for the measurement uncertainty after a maximum measurement time has been prescribed for the range measurement.

23. Method for measuring distance according to one of preceding Claims 15 to 21, **characterized in that** the value for the measurement uncertainty for the distance measurement is increased in steps until the distance measurement is possible in the prescribed time.

**Revendications**

1. Dispositif de mesure de distance, qui présente au moins une branche émettrice (14) qui présente au moins un émetteur (22, 24) qui émet un rayonnement modulé de mesure (16, 26, 36) en direction d'un objet-cible (20), et au moins une branche réceptrice (18) qui reçoit le rayonnement de mesure (17, 44) revenant de l'objet-cible (20) ainsi qu'une unité (28, 58) de commande et d'évaluation qui détermine la distance du dispositif par rapport à l'objet-cible (20), **caractérisé en ce que** le dispositif présente des moyens qui prédéterminent la valeur particulière de l'incertitude de mesure qui doit être associée à une mesure de distance par rapport à un objet-cible.

**2.** Dispositif selon la revendication 1, **caractérisé en ce que** les moyens sont configurés de telle sorte que l'incertitude de mesure qui doit être associée à une mesure de distance peut être réglée en fonction de la portée de mesure jusqu'à l'objet-cible (20) et/ou de la durée de mesure de distance.

**3.** Dispositif selon la revendication 1 ou 2, **caractérisé en ce que** le dispositif présente un support de mémoire (64) dans lequel l'incertitude de mesure qui doit être associée à une mesure de distance est conservée sous forme de données et en particulier sous la forme d'au moins une ligne caractéristique.

**4.** Dispositif selon la revendication 3, **caractérisé en ce que** le support de mémoire présente plusieurs lignes caractéristiques de l'incertitude de mesure, en particulier les lignes caractéristiques (a, b, c, d, e, f) de l'incertitude de mesure qui sont fonction de la portée de mesure, ces lignes caractéristiques pouvant être appelées par l'intermédiaire d'éléments d'actionnement (62) de l'appareil de mesure en vue d'une mesure de distance.

**5.** Dispositif selon la revendication 3, **caractérisé en ce que** le support de mémoire (62) présente plusieurs lignes caractéristiques de l'incertitude de mesure, en particulier les lignes caractéristiques (a, b, c, d, e, f) de l'incertitude de mesure qui sont fonction de la portée de mesure, ces lignes caractéristiques pouvant être appelées sélectivement ou successivement par l'unité (28, 58) de commande et d'évaluation de l'appareil de mesure en vue d'une mesure de distance.

**6.** Dispositif selon l'une des revendications précédentes, **caractérisé en ce que** le dispositif présente des moyens qui permettent de régler l'incertitude de mesure qu'il faut associer à une mesure de distance en imposant à l'unité (28, 58) de commande et d'évaluation du dispositif un rapport signal-bruit et en particulier un rapport signal-bruit du signal de mesure.

**7.** Dispositif selon la revendication 6, **caractérisé en ce que** le dispositif présente des moyens qui permettent avant une opération de mesure de prédéterminer pour l'appareil la valeur du rapport signal-bruit qu'il faut atteindre lors d'une opération de mesure.

**8.** Dispositif selon la revendication 6 ou 7, **caractérisé en ce que** le dispositif présente des moyens qui permettent à l'utilisateur du dispositif de présélectionner quantitativement au moins un paramètre de mesure qui fait partie d'un ensemble de paramètres qui comprend au moins la durée nécessaire au dispositif pour une mesure de distance ainsi que l'incertitude de mesure du dispositif lors d'une mesure de distance, de telle sorte que les autres paramètres de mesure de cet ensemble puissent être adaptés de manière semi-automatique au moyen de l'électronique de l'appareil de mesure pour que lors d'une opération de mesure, un rapport signal-bruit d'une grandeur de mesure puisse atteindre une valeur prédéterminée, en particulier le rapport signal-bruit du signal de mesure.

**9.** Dispositif selon la revendication 6 ou 7, **caractérisé en ce que** le dispositif présente des moyens qui permettent d'adapter de manière entièrement automatique un jeu de paramètres qui contient au moins la durée d'une mesure de distance au moyen du dispositif et l'incertitude de mesure du dispositif lors d'une mesure de distance à la distance de mesure particulière et/ou aux conditions ambiantes, en particulier à la capacité de réflexion d'un objet-cible et/ou à l'intensité de la lumière ambiante, de telle sorte qu'un rapport signal-bruit et en particulier le rapport signal-bruit du signal de mesure lors d'une mesure de distance puisse atteindre une valeur prédéterminée.

**10.** Dispositif selon l'une des revendications 6 à 9, **caractérisé en ce que** le dispositif présente des moyens qui permettent de déterminer avec une incertitude de mesure accrue la valeur limite prédéterminée du rapport signal-bruit d'une mesure de distance par une première mesure de distance effectuée préalablement à la mesure de distance proprement dite.

**11.** Dispositif selon l'une des revendications 6 à 9, **caractérisé en ce que** le dispositif présente des moyens qui permettent d'obtenir la valeur limite prédéterminée du rapport signal-bruit d'une mesure de distance par de résultats partiels d'une série de mesures de distance.

**12.** Dispositif selon l'une des revendications précédentes, **caractérisé en ce que** le dispositif présente une unité de sortie, en particulier une unité d'affichage (60) qui permet de représenter l'incertitude de mesure utilisée dans une mesure de distance et/ou de représenter la résolution de distance du dispositif.

**13.** Dispositif selon l'une des revendications précédentes, **caractérisé en ce que** le dispositif présente une unité de sortie et en particulier une unité d'affichage (60) qui permet de représenter le résultat d'une mesure de distance avec les décimales de la valeur de mesure de distance qui correspondent à la précision de mesure.

**14.** Dispositif selon l'une des revendications précédentes, **caractérisé en ce que** l'émetteur du dispositif présente au moins une source de lumière (22) et en particulier au moins un laser (24).

15. Procédé de mesure de distance, dans lequel au moins une branche émettrice (14) d'un appareil de mesure (10) émet un rayonnement modulé de mesure (16, 26, 36) en direction d'un objet-cible (20), le rayonnement de mesure (17, 44) réfléchi par l'objet-cible (20) et revenant de ce dernier étant détecté dans l'appareil de mesure (10), et la distance de l'appareil de mesure (10) par rapport à l'objet-cible (20) pouvant être déterminée à partir du signal de mesure réfléchi, **caractérisé en ce que** la valeur particulière de l'incertitude de mesure qu'il faut associer à la mesure de la distance à un objet-cible est prédéterminée pour l'appareil de mesure.

16. Procédé de mesure de distance selon la revendication 15, **caractérisé en ce que** la valeur de l'incertitude de mesure qui doit être associée à une mesure de distance peut être réglée en fonction de la portée de mesure jusqu'à l'objet-cible (20) et/ou de la durée de la mesure de distance.

17. Procédé de mesure de distance selon la revendication 15 ou 16, **caractérisé en ce que** la valeur de l'incertitude de mesure qui doit être associée à une mesure de distance est obtenue en prescrivant une valeur d'un rapport signal-bruit, en particulier du rapport signal-bruit du signal de mesure qu'il faut atteindre lors d'une opération de mesure.

18. Procédé de mesure de distance selon la revendication 17, **caractérisé en ce que** la valeur limite prédéterminée du rapport signal-bruit d'une mesure de distance est déterminée par une première mesure de distance à incertitude de mesure plus élevée effectuée préalablement à la mesure de distance proprement dite.

19. Procédé de mesure de distance selon la revendication 17, **caractérisé en ce que** la valeur limite prédéterminée du rapport signal-bruit d'une mesure de distance est obtenue à partir de résultats partiels d'une série de mesures de distance.

20. Procédé de mesure de distance selon l'une des revendications 15 à 18, **caractérisé en ce que** la valeur de l'incertitude de mesure qui doit être associée à une mesure de distance est conservé dans l'appareil de mesure sous la forme d'une ou plusieurs lignes caractéristiques et peut être appelée et/ou sélectionnée automatiquement par l'appareil et/ou par un utilisateur de l'appareil.

21. Procédé de mesure de distance selon la revendication 19, **caractérisé en ce que** la valeur de l'incertitude de mesure qui doit être associée à la mesure de distance est optimisée par la sélection d'une ligne caractéristique conservée dans l'appareil.

22. Procédé de mesure de distance selon la revendication 20, **caractérisé en ce que** la valeur de l'incertitude de mesure qui doit être associée à une mesure de distance est optimisée après définition d'une durée maximale d'une mesure de distance par la sélection d'une ligne caractéristique (a, b, c, d, e, f) de l'incertitude de mesure.

23. Procédé de mesure de distance selon l'une des revendications 15 à 21 qui précèdent, **caractérisé en ce que** lors d'une mesure de distance, la valeur de l'incertitude de mesure est augmentée pas à pas jusqu'à ce que la mesure de distance puisse être exécutée en une durée prédéterminée.

Fig.1

START
Vorgabe von n Abtast-Perioden (Wodurch eine minimale Messzeit gegeben ist) — S1

Signal-Erfassung
Abtasten von n Perioden — S2

Amplituden-Bestimmung — S3

Rausch-Bestimmung — S4

Genauigkeits-Vorgabe (automatisch oder manuell) — S6

Signal-Rausch-Verhältnis Berechnung: „IST" — S5

Signal-Rausch-Verhältnis-Berechnung: „SOLL" — S7

Erforderliche Anzahl Perioden n berechnen aus „SOLL"- „IST"Vergleich — S9

Entfernungs-Berechnung,wenn Abtasten von n Perioden abgeschlossen wurde — S10

Auflösung der Anzeige anpassen (mm, cm,...) automatisch oder manuell — S8

Anzeige vom Ergebnis in eingestellter Auflösung — S11

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19811550 A1
- EP 0885399 B1
- US 5612779 A
- US 5946081 A